# EUROPEAN PATENT APPLICATION

(11) **EP 4 573 929 A1**
(43) Date of publication of application: **25.06.2025**
(21) Application number: 22777574.9
(22) Date of filing: 26.08.2022
(51) Int. Cl.: A23P 30/00, A23L 13/70, B29C 45/00

(54) **EJECTION MACHINE FOR PRODUCING DEGRADABLE ITEMS USED FOR FOOD**

(30) Priority: 17.08.2022 CN 202222174132 U
(71) Applicant: Guangzhou Huige Technology Co., Ltd., Guangzhou, Guangdong 511400 (CN)
(72) Inventor: KONG, Zhi-Cong, Foshan, Guangdong 528000 (CN); WU, Feng-Yu, Nantou County 54061 Taiwan (TW); HSIAO, Ya-Ying, Hualien County 97345 Taiwan (TW)
(74) Representative: Lang, Christian
(86) International application number: PCT/CN2022/115036
(87) International publication number: WO 2024/036663

(57) **Abstract**

An injection machine for producing degradable edible objects includes a material pipe with an axial pipeline and an injection head; a spiral rod passed into the pipeline and having feeding section, a compressed section and a metering section, and the spiral rod being a screw thread formed at the feeding, compressed, and metering sections, and the feeding and metering sections having equal diameters, and the metering section having an outer diameter greater than that of the feeding section, and the compressed section having an outer diameter gradually increasing from the feeding section to the metering section, and the front end of the spiral rod being provided with a spiral rod head, and the injection nozzle being screwed with the injection head, and the heating unit being installed on the outer peripheral surfaces of the material pipe, the injection head and the injection nozzle; an injection nozzle and a heating unit, to make the raw material more uniformly liquefied, and the flow of the liquefied raw material more uniformly in order to accelerate the production speed and improve the production yield and quality.

## Description

### FIELD OF THE INVENTION

The present disclosure relates to an injection machine, and more particularly to an injection machine for producing degradable edible objects.

### BACKGROUND OF THE INVENTION

Many restaurants or consumers choose to buy disposable table utensils in order to save costs, and these disposable utensils are usually made of plastic or paper and have the effect of saving the cleaning cost and reducing the purchase cost of the table utensils compared with the reusable table utensils. However, the materials used for making the disposable table utensils are usually not biodegradable, thus easily causing the accumulation of garbage, and the garbage formed by the used disposable table utensils easily cause serious environmental pollution if they are disposed by the method of incineration or burial. Therefore, the recycling of disposable table utensils is very difficult, which leads to the issues of serious ecological damage and garbage hazard.

In order to improve the aforementioned issues, a degradable edible object has been introduced on the market. In addition to the properties of biodegradability and edibility, the degradable edible object can be completely degraded by microorganisms in nature after use, and finally decomposed to produce carbon dioxide and water. The degradable edible object is recyclable, reusable and non-toxic, and will not pollute the environment. However, the current production of degradable edible objects generally adopts plastic molding injection to hot melt raw material particles, and then under the action of extrusion force, the liquid raw material is injected into a mold for formation, and finally the mold is open to take out the solidified product after cooling. During the process of heating the raw material particles, the central part of the raw material particles cannot be melted quickly, so that the liquid raw material entering into the mold still contain some raw material particles, and the flow of liquid raw materials flowing to the mold is non-uniform, and the raw materials cannot enter the cavity of the mold uniformly, which adversely affects the quality of the product.

### SUMMARY OF THE INVENTION

In view of the aforementioned drawbacks of the conventional production of degradable edible objects, this disclosure provides an injection machine for producing degradable edible objects, including:
a material pipe, being in a hollow shape, and comprising a pipeline axially formed inside the material pipe, and an injection head installed at the front end of the material pipe, and an end of the injection head away from the material pipe having a threaded slot communicating with the pipeline;
a spiral rod, passed and installed into the pipeline of the material pipe, and having a driving end and a material output end configured to be opposite to the driving end, and the spiral rod being divided sequentially in the direction from the driving end to the material output end into a feeding section, a compressed section and a metering section, and the outer periphery of the spiral rod having a screw thread protruded from the feeding section, the feeding section and the metering section separately having equal diameters, and the outer diameter of the metering section being greater than the outer diameter of the feeding section, and the outer diameter of the compressed section gradually increasing in a direction from the feeding section to the metering section, and the front end of the spiral rod being a spiral rod head;
an injection nozzle, having a threaded section defined at the outer periphery of the rear end of the injection nozzle, and an injection channel axially disposed in the injection nozzle, and the injection nozzle being screwed and combined with the threaded slot by the threaded section, and the injection channel communicating with the pipeline of the material pipe through the injection head, and the front end of the injection nozzle front having an injection port communicating with the injection channel; having a threaded section defined at the outer periphery of the rear end of the injection nozzle, and an injection channel axially disposed in the injection nozzle, and the injection nozzle being screwed and combined with the threaded slot by the threaded section, and the injection channel communicating with the pipeline of the material pipe through the injection head, and the front end of the injection nozzle front having an injection port communicating with the injection channel; and a heating unit, installed onto the outer peripheral surface of the material pipe, the outer peripheral surface of the injection head, and the outer peripheral surface of the injection nozzle.

In a preferred embodiment, an end of the injection head proximate to the material pipe has a diversion channel, and the threaded slot is communicated with the pipeline through the diversion channel.

In a preferred embodiment, the compressed section has an outer diameter falling within a range between the outer diameter of the feeding section and the outer diameter of the metering section.

In a preferred embodiment, the spiral rod has a compression ratio from 2.7 to 3.

In a preferred embodiment, the heating unit comprises a plurality of heating rings surrounding and covering the outer peripheral surface of the material pipe, the outer peripheral surface of the injection head, and the outer peripheral surface of the injection nozzle.

In a preferred embodiment, the spiral rod head is installed to the front end of the spiral rod, and the front end of the spiral rod has a pointed-cone portion.

In a preferred embodiment, the spiral rod head is installed to the front end of the spiral rod, and the front end of the spiral rod has a long pointed-cone portion.

In a preferred embodiment, the spiral rod head is installed to the front end of the spiral rod, and the front end of the spiral rod has a short pointed-cone portion.

In a preferred embodiment, the spiral rod head is integrally formed at the front end of the spiral rod, and the front end of the spiral rod head has a long pointed-cone portion.

In a preferred embodiment, the spiral rod head integrally formed at the front end of the spiral rod front end, and the front end of the spiral rod head has a short pointed-cone portion.

The main purpose of the injection machine for producing degradable edible objects of this disclosure is to make the raw material more uniformly liquefied, and the flow of the liquefied raw material more uniformly in order to accelerate the production speed and improve the production yield and quality.

### BRIEF DESCRIPTION OF THE DRAWINGS

FIG. 1 is a schematic perspective view of this disclosure;
FIG. 2 is an exploded view of this disclosure;
FIG. 3 is a plan view of a spiral rod of this disclosure;
FIG. 4 is a schematic view showing the injection operation of this disclosure;
FIG. 5 is a plan view of a spiral rod of a second embodiment of this disclosure;
FIG. 6 is a plan view of a spiral rod of a third embodiment of this disclosure;
FIG. 7 is an exploded view of a fourth embodiment of this disclosure;
FIG. 8 is an exploded view of a fifth embodiment of this disclosure.

### REFERENCE NUMERAL

- 10: Material pipe
- 11: Pipeline
- 12: Fastening elements
- 13: Injection head
- 131: Diversion channel
- 132: Threaded slot
- 20: Spiral rod
- 20A: Driving end
- 20B: Material output end
- 21: Feeding section
- 22: Compressed section
- 23: Metering section
- 24: Screw thread
- 25: Spiral rod head
- 251: Pointed-cone portion
- 25A: Spiral rod head
- 251A: Long pointed-cone portion
- 25B: Spiral rod head
- 251B: Short pointed-cone portion
- 25C: Spiral rod head
- 251C: Long pointed-cone portion
- 25D: Spiral rod head
- 251D: Short pointed-cone portion
- 30: Injection nozzle
- 31: Threaded section
- 32: Injection channel
- 33: Injection port
- 40: Heating unit
- 41: Heating rings
- 50: Raw material

### DESCRIPTION OF THE PREFERRED EMBODIMENTS

This disclosure is further described by the following preferred embodiments in conjunction with the illustrations of related drawings, in the hope that those having ordinary skilled in the art of the field of this disclosure can implement the disclosure according to the description of this specification.

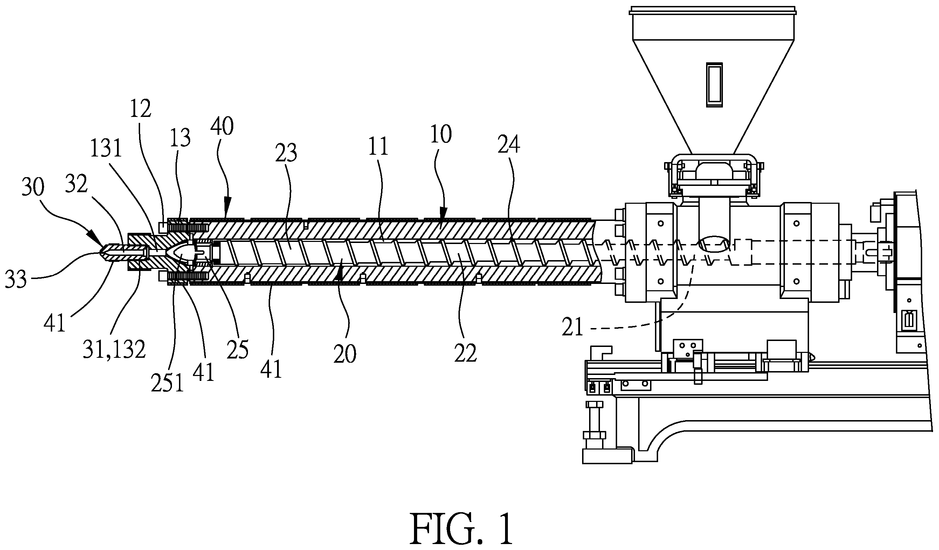

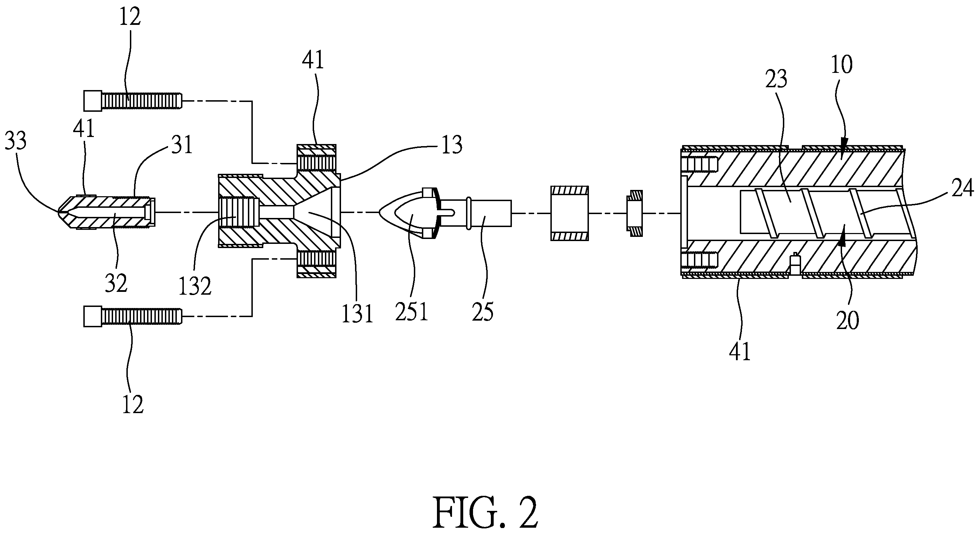

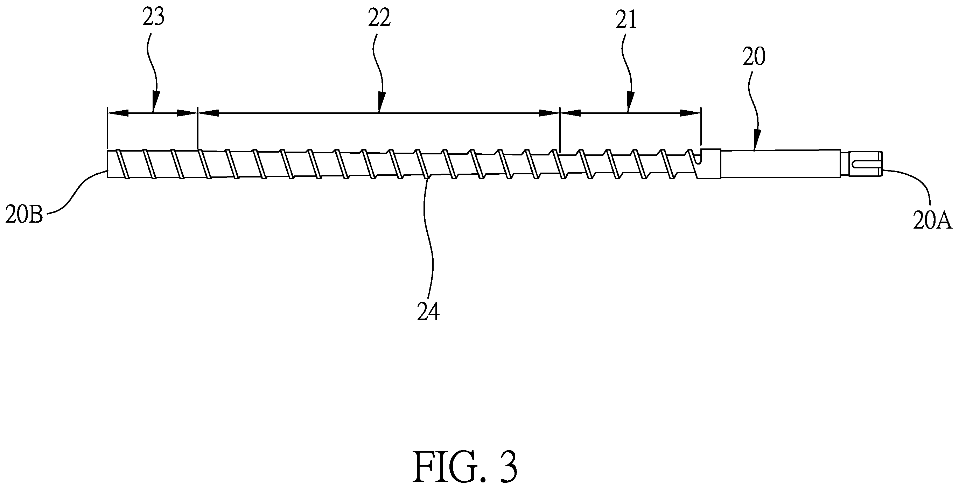

With reference to FIGS. 1 to 3 for an injection machine for producing degradable edible objects in accordance with this disclosure, the injection machine for producing degradable edible objects includes a material pipe 10, a spiral rod 20, an injection nozzle 30 and a heating unit 40.

The material pipe 10 is in a hollow shape, and includes a pipeline 11 axially formed inside the material pipe 10, an injection head 13 installed at the front end of at least one fastening elements 12, and an end of the injection head 13 proximate to the material pipe 10 has a diversion channel 131, and an end of the injection head 13 away from the material pipe 10 has a threaded slot 132 communicating with the pipeline 11 through the diversion channel 131.

The spiral rod 20 is passed and installed into the pipeline 11 of the material pipe 10, and has a driving end 20A and a material output end 20B configured to be opposite to the driving end 20A, and the spiral rod 20 is divided sequentially in the direction from the driving end 20A to the material output end 20B into a feeding section 21, a compressed section 22 and a metering section 23, and the outer periphery of the spiral rod 20 has a screw thread 24 protruded from the feeding section 21, the feeding section 21 and the metering section 23 separately have equal diameters, and the outer diameter of the metering section 23 is greater than the outer diameter of the feeding section 21, and the outer diameter of the compressed section 22 falls within a range between the outer diameter of the feeding section 21 and the outer diameter of the metering section 23, and the outer diameter of the compressed section 22 gradually increases in a direction from the feeding section 21 to the metering section 23, and the spiral rod 20 has a compression ratio of 2.7 to 3, preferably 2.86, and the front end of the spiral rod 20 has a spiral rod head 25, and the front end of the spiral rod head 25 has a pointed-cone portion 251, and the pointed-cone portion 251 is set in the diversion channel 131 of the injection head 13.

The outer periphery of the rear end of the injection nozzle 30 has a threaded section 31, and an injection channel 32 axially formed inside the injection nozzle, and the injection nozzle 30 is screwed and combined with the threaded slot 132 of the injection head 13 by the threaded section 31, and the injection channel 32 is communicated with the pipeline 11 of the material pipe 10 through the diversion channel 131 of the injection head 13, and the front end of the injection nozzle 30 has an injection port 33 communicating with the injection channel 32.

The heating unit 40 includes a plurality of heating rings 41 surrounding and covering the outer peripheral surface of the material pipe 10, the outer peripheral surface of the injection head 13, the outer peripheral surface of the injection nozzle 30.

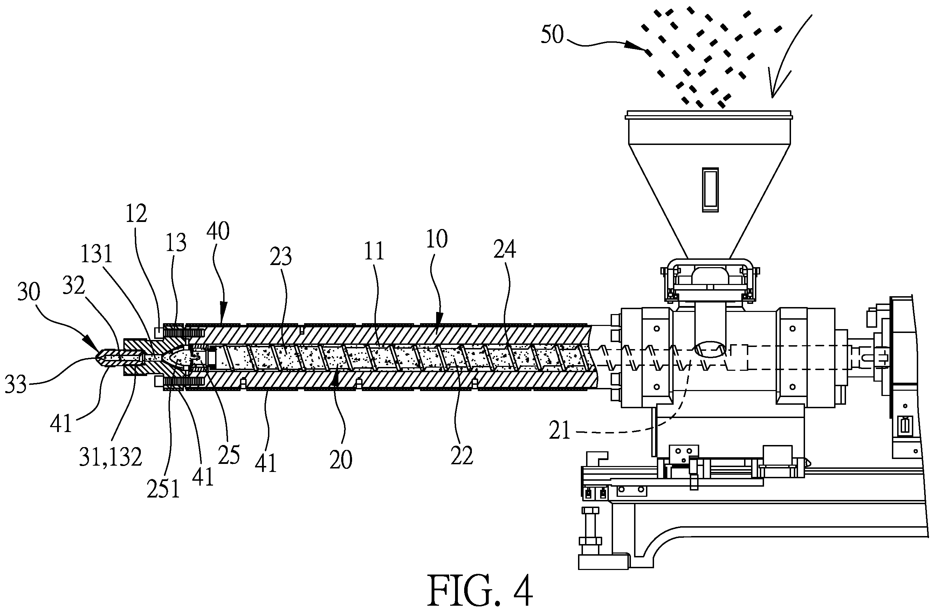

With reference to FIG. 4 for the injection operation, the driving end 20A of the spiral rod 20 drives the spiral rod 20 to rotate and send the granular raw material 50 into the material pipe 10, and the raw material 50 includes a dry powder and a maltose, and the dry powder includes: 20 to 80% rice flour, 10 to 50% multigrain flour, 0.1 to 20% konjac flour, 0.01 to 5% sodium alginate, 0.5 to 4% salt, 0.5 to 5% trehalose, 0.1 to 5% calcium chloride, 0.1 to 5% carrageenan, and 0.1 to 5% edible alkali, and the maltose is prepared according to proportion of 0.5~5% of the total weight of the dry powder, and the feeding section 21, the compressed section 22 and the metering section 23 of the spiral rod 20 are used for blending, compression and conveying, such that the raw material 50 is driven by the feeding section 21 to move through the compressed section 22 to the metering section 23, and the feeding section 21 is mainly used for conveying the raw material 50, and the compressed section 22 is mainly used for compressing and melting the raw material 50 and building pressure, and the metering section 23 is mainly used for pushing the raw material 50 melted in the compressed section 22 to the front end of the spiral rod 20 in the manner of constant quantity and temperature, and the raw material 50 is guided to the diversion channel 131 of the injection head 13 by the pointed-cone portion 251 of the spiral rod head 25 and then passed through the injection channel 32 of the injection nozzle 30, and discharged outwardly from the injection port 33 to produce the degradable edible object.

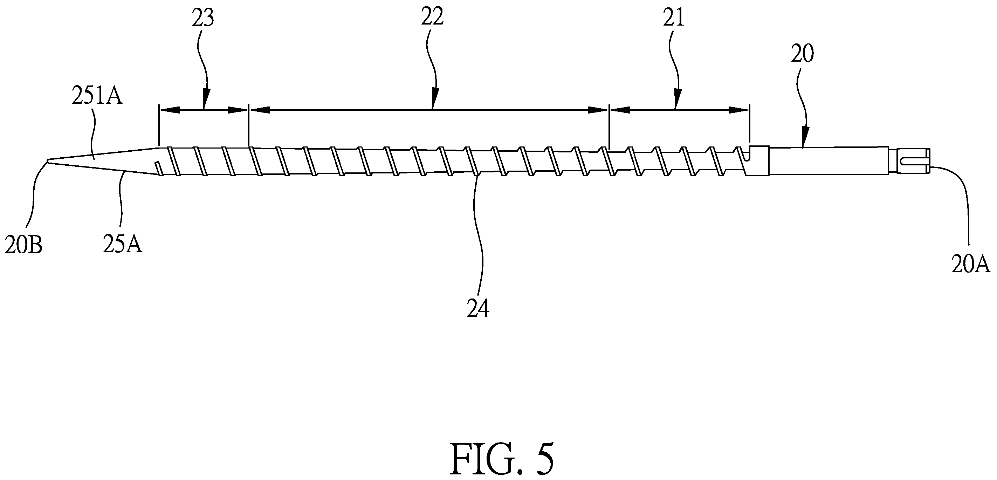

With reference to FIG. 5 for an injection machine for producing degradable edible objects in accordance with the second embodiment of this disclosure, the difference between this embodiment and the previous embodiment resides on that the front end of the spiral rod 20 is integrally formed into a spiral rod head 25A, and has a long pointed-cone portion 251A set into the diversion channel 131 of the injection head 13.

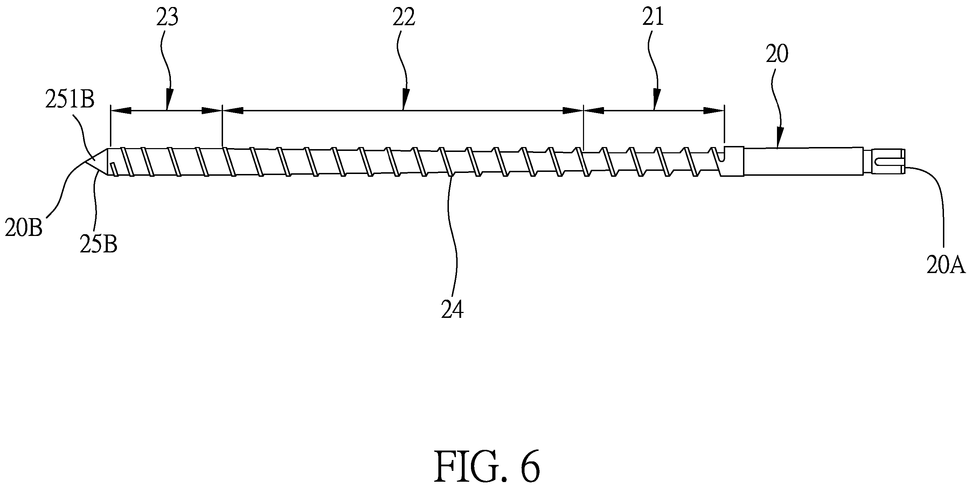

With reference to FIG. 6 for an injection machine for producing degradable edible objects in accordance with the third embodiment of this disclosure, the difference between this embodiment and the previous embodiments resides on that front end of the spiral rod 20 is integrally formed into a spiral rod head 25B, and has a short pointed-cone portion 251B set into the diversion channel 131 of injection head 13.

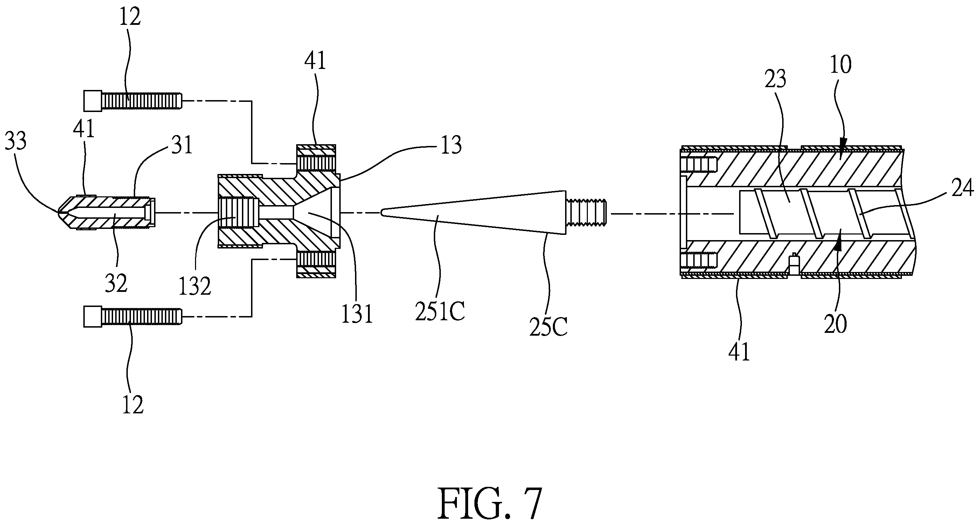

With reference to FIG. 7 for an injection machine for producing degradable edible objects in accordance with the fourth embodiment of this disclosure, the difference between this embodiment and the previous embodiments resides on the front end of the spiral rod 20 is provided with a spiral rod head 25C, and has a long pointed-cone portion 251C set into the diversion channel 131 of the injection head 13.

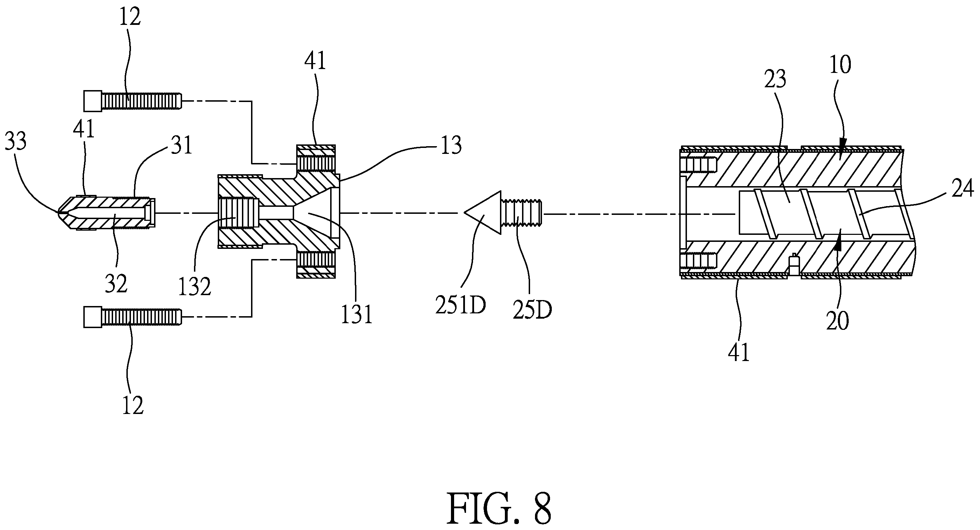

With reference to FIG. 8 for an injection machine for producing degradable edible objects in accordance with the fifth embodiment of this disclosure, the difference between this embodiment and the previous embodiments resides on the front end of the spiral rod 20 is provided with a spiral rod head 25D and has a short pointed-cone portion 251D set into the diversion channel 131 of the injection head 13.

The aforementioned embodiments have the following advantageous effects:
In the injection machine for producing degradable edible objects of this disclosure, the feeding section 21, compressed section 22 and metering section 23 of the spiral rod 20 are provided for blending, compressing and conveying, so that the raw material 50 can be liquefied more uniformly, and the flow of the liquefied raw material 50 can be uniform, and thus accelerating the production speed and improving the production yield and quality.

## Claims

1. An injection machine for producing degradable edible objects, comprising:
a material pipe, being in a hollow shape, and comprising a pipeline axially formed inside the material pipe, and an injection head installed at the front end of the material pipe, and an end of the injection head away from the material pipe having a threaded slot communicating with the pipeline;
a spiral rod, passed and installed into the pipeline of the material pipe, and having a driving end and a material output end configured to be opposite to the driving end, and the spiral rod being divided sequentially in the direction from the driving end to the material output end into a feeding section, a compressed section and a metering section, and the outer periphery of the spiral rod having a screw thread protruded from the feeding section, the feeding section and the metering section separately having equal diameters, and the outer diameter of the metering section being greater than the outer diameter of the feeding section, and the outer diameter of the compressed section gradually increasing in a direction from the feeding section to the metering section, and the front end of the spiral rod being a spiral rod head;
an injection nozzle, having a threaded section defined at the outer periphery of the rear end of the injection nozzle, and an injection channel axially formed inside the injection nozzle, and the injection nozzle being screwed and combined with the threaded slot by the threaded section, and the injection channel communicating with the pipeline of the material pipe through the injection head, and the front end of the injection nozzle front having an injection port communicating with the injection channel; and
a heating unit, installed onto the outer peripheral surface of the material pipe, the outer peripheral surface of the injection head, and the outer peripheral surface of the injection nozzle.

2. The injection machine for producing degradable edible objects according to claim 1, wherein an end of the injection head proximate to the material pipe has a diversion channel, and the threaded slot is communicated with the pipeline through the diversion channel.

3. The injection machine for producing degradable edible objects according to claim 1, wherein the compressed section has an outer diameter falling within a range between the outer diameter of the feeding section and the outer diameter of the metering section.

4. The injection machine for producing degradable edible objects according to claim 1, wherein the spiral rod has a compression ratio from 2.7 to 3.

5. The injection machine for producing degradable edible objects according to claim 1, wherein the heating unit comprises a plurality of heating rings surrounding and covering the outer peripheral surface of the material pipe, the outer peripheral surface of the injection head, and the outer peripheral surface of the injection nozzle.

6. The injection machine for producing degradable edible objects according to claim 1, wherein the spiral rod head is installed to the front end of the spiral rod, and the front end of the spiral rod has a pointed-cone portion.

7. The injection machine for producing degradable edible objects according to claim 1, wherein the spiral rod head is installed to the front end of the spiral rod, and the front end of the spiral rod has a long pointed-cone portion.

8. The injection machine for producing degradable edible objects according to claim 1, wherein the spiral rod head is installed to the front end of the spiral rod, and the front end of the spiral rod has a short pointed-cone portion.

9. The injection machine for producing degradable edible objects according to claim 1, wherein the spiral rod head is integrally formed at the front end of the spiral rod, and the front end of the spiral rod head has a long pointed-cone portion.

10. The injection machine for producing degradable edible objects according to claim 1, wherein the spiral rod head integrally formed at the front end of the spiral rod front end, and the front end of the spiral rod head has a short pointed-cone portion.
